# EUROPÄISCHE PATENTSCHRIFT

(11) **EP 2 904 333 B1**
(45) Veröffentlichungstag und Bekanntmachung des Hinweises auf die Patenterteilung: **11.10.2017**
(21) Anmeldenummer: 13756384.7
(22) Anmeldetag: 26.08.2013
(51) Int. Cl.: F24F 13/32, F04D 29/64, F24F 7/007

(54) **TRÄGERELEMENT FÜR EINEN VENTILATOR SOWIE DAMIT AUSGESTATTETER VENTILATOR**
SUPPORT ELEMENT FOR A FAN AND FAN EQUIPPED THEREWITH
ÉLÉMENT DE SUPPORT POUR VENTILATEUR ET VENTILATEUR ÉQUIPÉ D'UN TEL ÉLÉMENT DE SUPPORT

(30) Priorität: 08.10.2012 DE 102012109516
(43) Veröffentlichungstag der Anmeldung: 12.08.2015
(73) Patentinhaber: EBM-Papst Mulfingen GmbH&CO. KG, 74673 Mulfingen (DE)
(72) Erfinder: HELI, Thomas, 74595 Langenburg (DE); RIEGLER, Peter, 97944 Boxberg (DE); GÜNTHER, Jörg, 74677 Dörzbach (DE)
(74) Vertreter: Jostarndt Patentanwalts-AG
(86) Internationale Anmeldenummer: PCT/EP2013/067624
(87) Internationale Veröffentlichungsnummer: WO 2014/056656

(56) Entgegenhaltungen:
- WO-A1-2010/095999
- GB-A- 749 685
- US-A- 2 619 021
- US-A- 2 697 163
- US-A- 6 126 415

## Beschreibung

Die vorliegende Erfindung betrifft ein Trägerelement zur Halterung eines Ventilators, insbesondere eines Axialventilators, mit einem Wandring zur Aufnahme des Ventilators.

Ferner betrifft die Erfindung auch einen Ventilator mit einem solchen Trägerelement.

Ventilatoren, insbesondere Axialventilatoren, werden häufig in der Kälte- und Klimatechnik eingesetzt, um Luft durch Wärmetauscher zu fördern. Dazu wird jeweils ein Ventilator über sein Trägerelement an einer Montagewandung im Bereich vor einer Wandungsöffnung so montiert, dass der hinter der Wandungsöffnung angeordnete Wärmetauscher mit der vom Ventilator geförderten Luft durchströmt wird. Aus hygienischen Gründen müssen solche Wärmetauscher nach bestimmten Betriebszeiten gereinigt werden. Dazu war es bisher erforderlich, den Ventilator mit seinem Trägerelement gänzlich zu demontieren, das heißt den so genannten Wandring von der Montagewand zu entfernen, um den Wärmetauscher zur Reinigung zugänglich zu machen. Dies führte zu einem hohen Zeit- und Arbeitsaufwand.

Die WO 2010/095999 A1 offenbart eine Ventilatoreinheit zur Montage an einer Wand im Inneren eines Hauses mit einem Trägerelement und einem Ventilator. Das Trägerelement weist eine kreisrunde Trägerelementöffnung auf. Der Ventilator ist von einem Ring umgeben und mit diesem fest verbunden, welcher um eine vertikale Achse drehbar mit dem Trägerelement verbunden ist. Dazu weist der Ring zwei vertikale Zapfen auf, welche jeweils in einer Bohrung eines mit dem Trägerelement fest verbundenen Flansches drehbar gelagert sind. Dadurch kann der Ventilator von einer Gebrauchsstellung, in der er direkt vor der Trägerelementöffnung angeordnet ist, in eine Wartungsstellung verschwenkt werden, in der er von der Trägerelementöffnung weg geschwenkt ist.

Der vorliegenden Erfindung liegt die Aufgabe zu Grunde, ein Trägerelement der beschriebenen Art so zu verbessern, dass die zuvor beschriebenen Wartungsarbeiten vereinfacht werden und gleichzeitig ein einfacher und stabiler Zusammenbau des Trägerelements gewährleistet wird.

Erfindungsgemäß wird dies durch die Merkmale des unabhängigen Anspruchs 1 erreicht. Vorteilhafte Ausgestaltungen der Erfindung sind in den abhängigen Ansprüchen sowie in der anschließenden Beschreibung enthalten. Ein Ventilator mit dem erfindungsgemäßen Trägerelement ist Gegenstand des Anspruchs 12.

Demnach ist -wie dies bereits bekannt ist- vorgesehen, dass der Wandring an seinem Außenumfang ein Scharnier aufweist, welches aus einem mit dem Wandring fest verbundenen ersten Scharnierteil und einem relativ zu dem ersten Scharnierteil um eine Scharnierachse schwenkbaren zweiten Scharnierteil besteht. Indem das zweite Scharnierteil ebenfalls an der jeweiligen Montagewand im Bereich neben der Wandungsöffnung befestigt wird, braucht für spätere Wartungsarbeiten nur der Wandring von der Wandung gelöst zu werden, bleibt aber über das Scharnier mit der Montagewand verbunden, so dass eine vollständige Demontage entfällt. Der gesamte Ventilator kann dann über die gelenkige Scharnier-Aufhängung des Wandrings einfach und komfortabel nach Art eines Klappdeckels bzw. einer Tür von der Wandungsöffnung weg geschwenkt werden. Es erübrigt sich eine aufwändige komplette Demontage und Wieder-Montage des Ventilators. Der Wärmetauscher ist so zur Reinigung frei zugänglich. Abschließend braucht nur noch der Ventilator wieder vor die Wandungsöffnung zurückgeschwenkt und der Wandring an der Wand fixiert zu werden.

Erfindungsgemäß weisen die beiden Scharnierteile in Richtung der Scharnierachse fluchtende Lageraufnahmen einerseits und Lagerzapfen andererseits auf, die in einer zu einer Mittelachse des Wandrings parallelen Fügerichtung zusammengefügt sind. Zudem weist das zweite Scharnierteil mehrere, sich senkrecht zur Scharnierachse erstreckende Zapfenansätze mit jeweils zwei entgegengesetzten axialen Lagerzapfen auf, wobei jeder Zapfenansatz verzahnungsartig zwischen zwei Aufnahmeansätzen des ersten Scharnierteils und mit seinen Lagerzapfen in gegenüberliegende Lageraufnahmen der Aufnahmeansätze eingreift.

Anhand eines in der Zeichnung veranschaulichten, bevorzugten Ausführungsbeispiels soll die Erfindung im Folgenden weitergehend erläutert werden. Es zeigen:
- Fig. 1: eine Perspektivansicht eines Ventilators mit einem erfindungsgemäßen Trägerelement, wobei ein erfindungsgemäßes Scharnier teilweise explosionsartig getrennt dargestellt ist,
- Fig. 2: eine Ausschnittvergrößerung des Bereiches II in Fig. 1,
- Fig. 3: eine weitere Perspektivansicht des Ventilators gemäß Fig. 1 aus einer anderen Blickrichtung und in Explosionsdarstellung des Scharniers,
- Fig. 4: eine Ausschnittvergrößerung des Bereiches IV in Fig. 3,
- Fig. 5: eine Perspektivansicht des Ventilators in einem Montagezustand zusammen mit einer Montagewand und
- Fig. 6: eine Perspektivansicht der Anordnung gemäß Fig. 5 mit über das Scharnier verschwenktem Ventilator.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

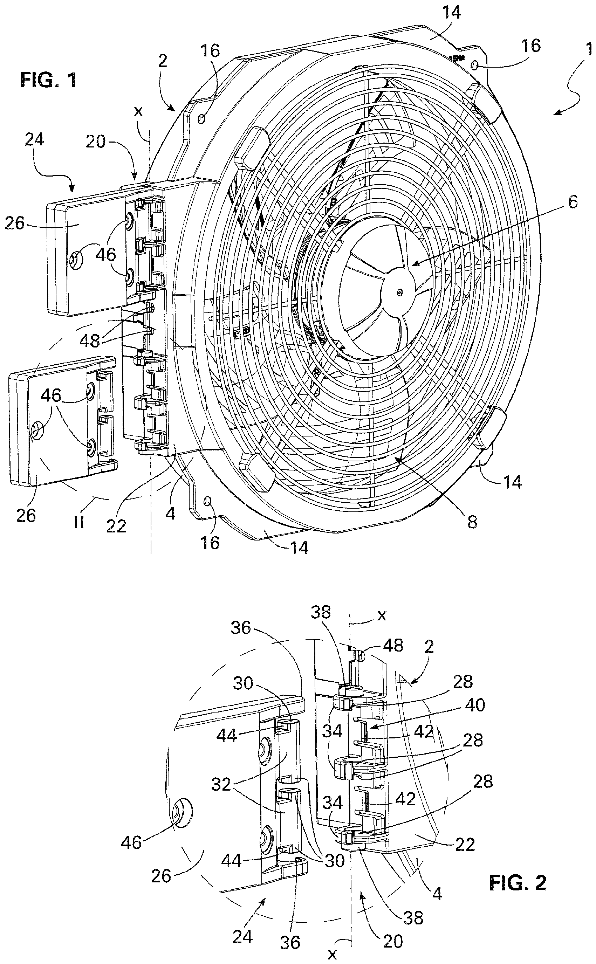

Wie sich zunächst aus Fig. 1 ergibt, ist bei dem dargestellten, bevorzugten Ausführungsbeispiel ein Ventilator 1 als Axialventilator ausgebildet. Der Ventilator 1 weist ein Trägerelement 2 mit einem so genannten Wandring 4 auf. Zentrisch in dem Wandring 4 ist ein elektrischer Ventilatormotor 6 mit einem Ventilator-Laufrad 8 befestigt.

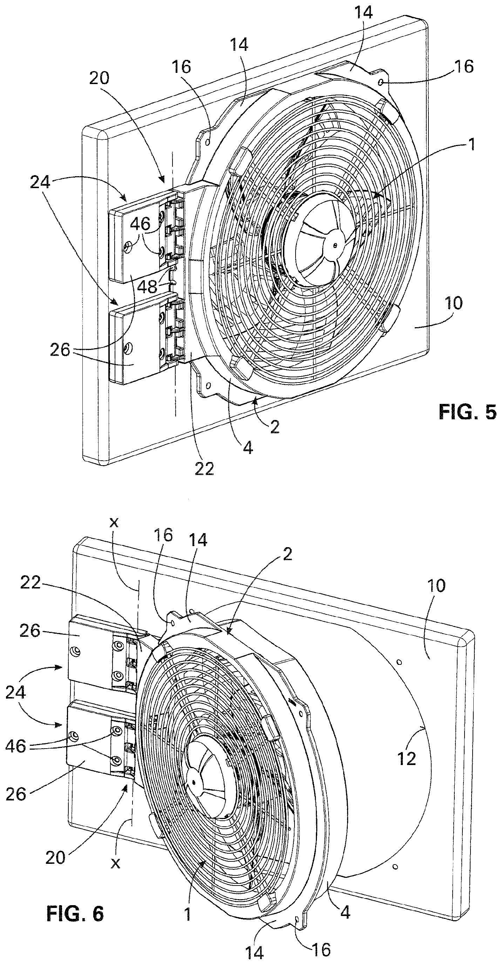

Gemäß Fig. 5 und 6 ist der Ventilator 1 über seinen Wandring 4 an einer Montagewand 10 im Bereich vor einer Wandungsöffnung 12 befestigbar, wozu der Wandring 4 bevorzugt einen flanschartigen Halteabschnitt 14 mit Montagelöchern 16 aufweist.

Der Wandring 4 weist an einer Stelle seines Außenumfangs ein Scharnier 20 auf. Dieses Scharnier 20 besteht aus einem mit dem Wandring 4 fest, insbesondere einstückig verbundenen ersten Scharnierteil 22 und einem relativ zu dem ersten Scharnierteil 22 um eine Scharnierachse X schwenkbaren zweiten Scharnierteil 24. Die Scharnierachse X verläuft bevorzugt tangential zu dem Wandring 4 oder - wie dargestellt - zu einer Tangente parallel nach außen versetzt und in einer von dem Wandring 4 definierten Ringebene.

In der dargestellten Ausführung ist das zweite Scharnierteil 24 zweiteilig ausgebildet, es besteht aus zwei in Richtung der Scharnierachse X beabstandet benachbarten, insbesondere identischen Halteplatten 26.

Das erste Scharnierteil 22 ist mit dem Wandring 4 bevorzugt als einstückiges Formteil insbesondere aus Kunststoff ausgebildet. Auch jede Halteplatte 26 ist bevorzugt als einstückiges Kunststoff-Formteil ausgebildet.

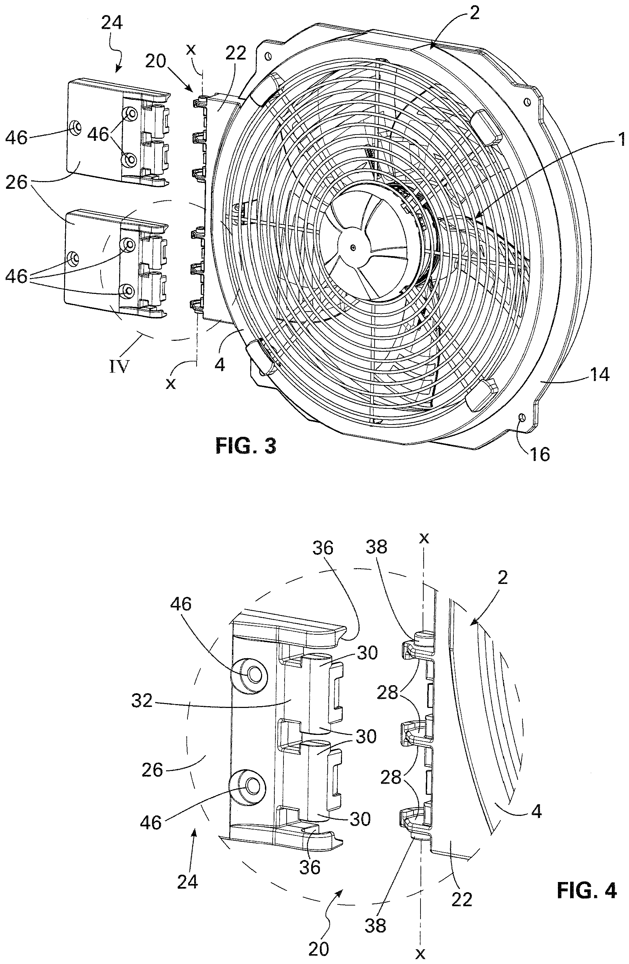

Wie sich insbesondere aus den Ausschnittvergrößerungen in Fig. 2 und 4 ergibt, weisen die beiden Scharnierteile 22, 24 erfindungsgemäß in Richtung der Scharnierachse X fluchtende Lageraufnahmen 28 einerseits und Lagerzapfen 30 andererseits auf. Dabei sind die Lagerzapfen 30 in einer zu einer Mittelachse des Wandrings 4 parallelen Fügerichtung in die Lageraufnahmen 28 eingesetzt. Dazu sind die Lageraufnahmen 28 vorzugsweise als entsprechend der Fügerichtung offene Lagerschalen ausgebildet. Das zweite Scharnierteil 24 weist erfindungsgemäß mehrere, sich senkrecht zur Scharnierachse X hin erstreckende Zapfenansätze 32 mit jeweils zwei entgegengesetzten axialen Lagerzapfen 30 auf, wobei jeder Zapfenansatz 32 verzahnungsartig zwischen zwei Aufnahmeansätze 34 des ersten Scharnierteils 22 und mit seinen Lagerzapfen 30 in gegenüberliegende, korrespondierende Lageraufnahmen 28 der Aufnahmeansätze 34 eingreift. In bevorzugter Ausgestaltung übergreift das zweite Scharnierteil 24 zusätzlich mit seitlichen Lageraufnahmen 36 axiale Lagerzapfen 38 des ersten Scharnierteils 22.

Bevorzugt weist jede Halteplatte 26 zwei Zapfenansätze 32 auf, so dass das Scharnier 20 insgesamt vier Zapfenansätze 32 mit je zwei Lagerzapfen 30 aufweist. Somit liegen insgesamt acht Lagerzapfen 30 in korrespondierenden Lageraufnahmen 28 in Richtung der Scharnierachse X hintereinander. Daraus resultiert durch eine große Lagerlänge eine hohe mechanische Stabilität des Scharniers 20, welches dadurch auch für große und schwere Ventilatoren 1 geeignet ist.

Vorzugsweise sind die senkrecht zur Scharnierachse X zusammengefügten Scharnierteile 22, 24 über Rastmittel 40 gegen Lösen fixiert, damit die Scharnierteile 22, 24 schon im Auslieferzustand des Ventilators 1 vor dessen Befestigung an einer Montagewand 10 sicher zusammengehalten werden. Wie sich insbesondere aus Fig. 2 ergibt, können diese Rastmittel 40 von federelastischen Rastansätzen 42 des ersten Scharnierteils 22 gebildet sein, wobei die Rastansätze 42 so angeordnet und ausgebildet sind, dass sie nach dem Zusammenfügen der Scharnierteile 22, 24 die Zapfenansätze 32 des zweiten Scharnierteils 24 rastend hintergreifen.

Zusätzlich ist in bevorzugter Ausgestaltung vorgesehen, dass die Scharnierteile 22, 24 in nur einer definierten relativen Schwenkstellung zusammenfügbar und trennbar sind. Bei dem dargestellten Ausführungsbeispiel wird dies dadurch erreicht, dass jeder Lagerzapfen 30 - siehe dazu insbesondere Fig. 2 - eine seitliche Abflachung 44 aufweist, durch die sich der Querschnitt des Lagerzapfens 30 reduziert. Jede schalenförmige Lageraufnahme 28 weist hierbei eine entsprechend schmale Einführöffnung auf. Dadurch werden die Lagerzapfen 30 in allen anderen Schwenkstellungen gegen Lösen formschlüssig in den Lageraufnahmen 28 gehalten, weil sie dann mit ihrem vollständigen Durchmesser nicht durch die verengten Einführöffnungen der Lageraufnahmen 28 passen.

Wie sich noch aus Fig. 5 und 6 ergibt, kann das zweite Scharnierteil 24 an der Montagewand 10 im Bereich neben der Wandungsöffnung 12 befestigt werden. Dazu weist das zweite Scharnierteil 24 bzw. jede Halteplatte 26 entsprechende Montagelöcher 46 für nicht dargestellte Befestigungsschrauben auf. Durch die Befestigung des zweiten Scharnierteils 24 an der Montagewand 10 kann der gesamte Ventilator 1 - nach Lösen des Wandrings 4 von der Montagewand 10 - nach Art einer Tür - siehe Fig. 6 - von der Wandungsöffnung 12 weggeschwenkt werden. Indem das zweite Scharnierteil 24 bzw. jede Halteplatte 26 von der der Montagewand 10 gegenüberliegenden Seite her mit dem ersten Scharnierteil 22 zusammengefügt ist, kann sich nach dem Befestigen des zweiten Scharnierteils 24 an der Montagewand 10 das erste Scharnierteil 22 mit dem Wandring 4 nicht mehr von dem zweiten Scharnierteil 24 lösen, weil die Aufnahmeansätze 34 mit den Lageraufnahmen 28 über die Zapfenansätze 32 mit den Lagerzapfen 30 gegen Lösen gehalten sind.

Es sei noch bemerkt, dass der Wandring 4 in einem in Umfangsrichtung gesehen insbesondere mittigen Bereich des ersten Scharnierteils 22 mindestens eine Kabel-Einführöffnung 48 für ein zu dem Ventilatormotor 6 führendes Motorkabel (nicht dargestellt) aufweist. Gemäß Fig. 1 sind im zwischen den zwei Halteplatten 26 liegenden Bereich bevorzugt zwei Einführöffnungen 48 vorgesehen.

## Patentansprüche

1. Trägerelement (2) zur Halterung eines Ventilators (1), insbesondere eines Axialventilators, mit einem Wandring (4) zur Aufnahme des Ventilators (1), wobei der Wandring (4) an seinem Außenumfang ein Scharnier (20) aufweist, das aus einem mit dem Wandring (4) verbundenen ersten Scharnierteil (22) und einem relativ zu dem ersten Scharnierteil (22) um eine Scharnierachse (X) schwenkbaren zweiten Scharnierteil (24) besteht,
**dadurch gekennzeichnet, dass**
die beiden Scharnierteile (22, 24) in Richtung der Scharnierachse (X) fluchtende Lageraufnahmen (28) einerseits und Lagerzapfen (30) andererseits aufweisen, die in einer zu einer Mittelachse des Wandrings (4) parallelen Fügerichtung zusammengefügt sind und
das zweite Scharnierteil (24) mehrere, sich senkrecht zur Scharnierachse (X) erstreckende Zapfenansätze (32) mit jeweils zwei entgegengesetzten axialen Lagerzapfen (30) aufweist, wobei jeder Zapfenansatz (32) verzahnungsartig zwischen zwei Aufnahmeansätzen (34) des ersten Scharnierteils (22) und mit seinen Lagerzapfen (30) in gegenüberliegende Lageraufnahmen (28) der Aufnahmeansätze (34) eingreift.

2. Trägerelement nach Anspruch 1,
**dadurch gekennzeichnet, dass** die Scharnierachse (X) tangential zu dem Wandring (4) oder zu einer Tangente parallel versetzt in einer von dem Wandring (4) definierten Ringebene verläuft.

3. Trägerelement nach Anspruch 1 oder 2,
**dadurch gekennzeichnet, dass** das zweite Scharnierteil (24) zumindest zweiteilig von in Richtung der Scharnierachse (X) beabstandet benachbarten, insbesondere gleichartigen Halteplatten (26) gebildet ist.

4. Trägerelement nach einem der Ansprüche 1 bis 3,
**dadurch gekennzeichnet, dass** das erste Scharnierteil (22) mit dem Wandring (4) einstückig verbunden ist.

5. Trägerelement nach einem der vorhergehenden Ansprüche,
**dadurch gekennzeichnet, dass** die Lageraufnahmen (28) als entsprechend der Fügerichtung offene Lagerschalen ausgebildet sind.

6. Trägerelement nach einem der vorhergehenden Ansprüche,
**dadurch gekennzeichnet, dass** das zweite Scharnierteil (24) zusätzlich mit Lageraufnahmen (36) axiale Lagerzapfen (38) des ersten Scharnierteils (22) übergreift.

7. Trägerelement nach einem der vorhergehenden Ansprüche,
**dadurch gekennzeichnet, dass** die zusammengefügten Scharnierteile (22, 24) über Rastmittel (40) gegen Lösen fixiert sind.

8. Trägerelement nach einem der vorhergehenden Ansprüche,
**dadurch gekennzeichnet, dass** die Scharnierteile (22, 24) in nur einer definierten relativen Schwenkstellung zusammenfügbar und trennbar sind.

9. Trägerelement nach einem der vorhergehenden Ansprüche,
**dadurch gekennzeichnet, dass** der Wandring (4) auf einer Montagewand (10) im Bereich einer Wandungsöffnung (12) :befestigbar ist, wozu der Wandring (4) bevorzugt einen äußeren flanschartigen Halteabschnitt (14) mit Montagelöchern (16) aufweist.

10. Trägerelement nach Anspruch 9,
**dadurch gekennzeichnet, dass** das zweite Scharnierteil (24) an der Montagewand (10) im Bereich neben der Wandungsöffnung (12) befestigbar ist, wozu das zweite Scharnierteil (24) Montagelöcher (46) aufweist.

11. Trägerelement nach einem der vorhergehenden Ansprüche,
**dadurch gekennzeichnet, dass** der Wandring (4) in einem in Umfangsrichtung insbesondere mittigen Bereich des ersten Scharnierteils (22) mindestens eine Kabel-Einführöffnung (48) aufweist.

12. Ventilator (1), insbesondere Axialventilator, mit einem Trägerelement (2) nach einem der vorhergehenden Ansprüche und mit einem in dem Wandring (4) gehalterten Ventilatormotor (6) mit Ventilator-Laufrad (8).

## Claims

1. A support element (2) for holding a fan (1), in particular, an axial fan, comprising a wall ring (4) for receiving the fan (1), whereby the outer circumference of the wall ring (4) has a hinge (20) comprising a first hinge part (22) that is joined to the wall ring (4), and a second hinge part (24) that can be pivoted around a hinge axis (X) relative to the first hinge part (22),
**characterized in that**
the two hinge parts (22, 24) have, on the one hand, flush bearing receptacles (28) in the direction of the hinge axis (X), and, on the other hand, bearing journals (30) that are joined in a joining direction that is parallel to the center axis of the wall ring (4),
and
the second hinge part (24) has several journal projections (32) that extend perpendicular to the hinge axis (X) and that each have two opposing axial bearing journals (30), whereby each journal projection (32) intermeshes between two receiving projections (34) of the first hinge part (22) and, with its bearing journal (30), into opposite bearing receptacles (28) of the receiving projections (34).

2. The support element according to claim 1,
**characterized in that** the hinge axis (X) runs tangentially to the wall ring (4) or to a tangent that is offset parallel in a ring plane defined by the wall ring (4).

3. The support element according to claim 1 or 2,
**characterized in that** the second hinge part (24) is configured in two parts and consists of two, especially identical, holding plates (26) that are at a distance from each other in the direction of the hinge axis (X).

4. The support element according to one of claims 1 to 3,
**characterized in that** the first hinge part (22) is joined in one piece to the wall ring (4).

5. The support element according to one of the preceding claims,
**characterized in that** the bearing receptacles (28) are configured as open bearing shells corresponding to the joining direction.

6. The support element according to one of the preceding claims,
**characterized in that** the second hinge part (24), with bearing receptacles (36), additionally extends over axial bearing journals (38) of the first hinge part (22).

7. The support element according to one of the preceding claims,
**characterized in that** the joined hinge parts (22, 24) are secured against coming loose by latching means (40).

8. The support element according to one of the preceding claims,
**characterized in that** the hinge parts (22, 24) can only be joined and separated in a defined relative pivoted position.

9. The support element according to one of the preceding claims,
**characterized in that** the wall ring (4) can be attached to a mounting wall (10) in the area of a wall opening (12), for which purpose, the wall ring (4) preferably has an outer flange-like holding section (14) with mounting holes (16).

10. The support element according to claim 9,
**characterized in that** the second hinge part (24) is fastened to the mounting wall (12) in the area next to the wall opening (12), for which purpose the second hinge part (24) has mounting holes (46).

11. The support element according to one of the preceding claims,
**characterized in that,** especially in a middle area of the first hinge part (22) as seen in the circumferential direction, the wall ring (4) has at least one cable insertion opening (48).

12. A fan (1), in particular, an axial fan, having a support element (2) according to one of the preceding claims and having a fan motor (6) with a fan impeller (8) that is secured in the wall ring (4).

## Revendications

1. Élément de support (2) destiné à maintenir un ventilateur (1), et plus particulièrement un ventilateur axial, comportant une bague murale (4) destinée à recevoir le ventilateur (1), la bague murale (4) comportant, sur son pourtour extérieur, une charnière (20) qui est composée d'une première partie de charnière (22) reliée à la bague murale (4) et d'une deuxième partie de charnière (24) pivotante relativement à la première partie de charnière (22) autour d'un axe de charnière (X),
**caractérisé en ce que**
les deux parties de charnière (22, 24) comportent, d'une part, des logements de palier (28) alignés en direction de l'axe de charnière (X) et, d'autre part, des tourillons de palier (30) qui sont assemblés dans une direction d'assemblage parallèle à un axe central de la bague murale (4) et
la deuxième partie de charnière (24) comporte plusieurs tourillons de palier (32) s'étendant verticalement par rapport à l'axe de charnière (X) avec respectivement deux tourillons de palier (30) axiaux opposés, chaque tourillon de palier (32) s'engageant à l'instar d'une denture entre deux pattes de logement (34) de la première partie de charnière (22) et avec ses tourillons de palier (30) dans des logements de palier opposés (28) des pattes de logement (34).

2. Élément de support selon la revendication 1, **caractérisé en ce que** l'axe de charnière (X) se trouve dans un plan annulaire défini par la bague murale (4) tangentiellement à la bague murale (4) ou avec décalage parallèle par rapport à une tangente.

3. Élément de support selon la revendication 1 ou 2, **caractérisé en ce que** la deuxième partie de charnière (24) est formée au moins en deux parties par des plaques de maintien (26) voisines distantes en direction de l'axe de charnière (X), et en particulier de même type.

4. Élément de support selon l'une des revendications 1 bis 3, **caractérisé en ce que** la première partie de charnière (22) est reliée d'une seule pièce avec la bague murale (4).

5. Élément de support selon l'une des revendications précédentes, **caractérisé en ce que** les logements de palier (28) sont réalisés en tant que coquilles de logement ouvertes selon la direction d'assemblage.

6. Élément de support selon l'une des revendications précédentes, **caractérisé en ce que** la deuxième partie de charnière (24) chevauche en outre des tourillons de palier axiaux (38) de la première partie de charnière (22) au moyen de logements de palier (36).

7. Élément de support selon l'une des revendications précédentes, **caractérisé en ce que** les parties de charnière assemblées (22, 24) sont fixées par des moyens d'encliquetage (40) pour les empêcher de se détacher.

8. Élément de support selon l'une des revendications précédentes, **caractérisé en ce que** les parties de charnière (22, 24) ne peuvent être assemblées et dissociées que dans une position de pivotement relative définie.

9. Élément de support selon l'une des revendications précédentes, **caractérisé en ce que** la bague murale (4) peut être fixée sur une paroi de montage (10) dans la zone d'une ouverture de paroi (12), la bague murale (4) présentant préférentiellement, à cet effet, une partie de maintien (14) extérieure de type flasque présentant des trous de montage (16).

10. Élément de support selon la revendication 9, **caractérisé en ce que** la deuxième partie de charnière (24) peut être fixée sur la paroi de montage (10) dans la zone de l'ouverture de paroi (12), la deuxième partie de charnière (24) présentant, à cet effet, des trous de montage (46).

11. Élément de support selon l'une des revendications précédentes, **caractérisé en ce que** la bague murale (4) présente au moins un orifice d'introduction de câble (48) dans une zone de la première partie de charnière (22) située dans la direction du pourtour, et plus particulièrement centrale.

12. Ventilateur (1), et plus particulièrement ventilateur axial, comportant un élément de support (2) selon l'une des revendications précédentes et un moteur de ventilateur (6) maintenu dans la bague murale (4) et comportant une roue de ventilateur (8).
